# EUROPEAN PATENT APPLICATION

(11) **EP 4 641 279 A1**
(43) Date of publication of application: **29.10.2025**
(21) Application number: 25172175.9
(22) Date of filing: 24.04.2025
(51) Int. Cl.: G02B 6/44, G02B 6/48

(54) **FIBER OPTIC ENCLOSURE MOUNT**

(30) Priority: 24.04.2024 US 202463638045 P
(71) Applicant: CORNING RESEARCH & DEVELOPMENT CORPORATION, Corning NY 14831 (US)
(72) Inventor: Desard, Christophe, 44 410 Herbignac (FR); Hoehn, Holger, 12555 Berlin (DE); Wilcox, Dayne, El Cerrito, 94530 (US)
(74) Representative: Elkington and Fife LLP

(57) **Abstract**

A mount for a fiber optic enclosure and corresponding fiber optic enclosure are disclosed. The mount comprises a back plate and a mounting tab attached to the back plate and movable between a first position and a second position. The mounting tab comprises a first attachment point. In the first position the first attachment point is exposed for mounting to a surface, and in the second position the back plate and mounting tab cooperate to define a second attachment point.

## Description

### PRIORITY APPLICATIONS

This application claims the benefit of priority of U.S. Provisional Application Serial No. 63/638,045 filed on April 24, 2024, the content of which is relied upon and incorporated herein by reference in its entirety.

### BACKGROUND

This disclosure relates to the field of apparatuses for fiber optic networks. In particular, the technology of the disclosure relates to fiber optic enclosures and mounts for fiber optic enclosures.

Fiber optic networks allow information to be transmitted via optical signals transmitted through special glass or polymer cables known as optical fibers. Compared with traditional copper wiring, optical fibers allow transmission over greater distances with substantially less signal loss, provide a greater bandwidth, and do not suffer from electrical interference. Fiber optic networks are particularly useful when providing long-distance communication and high bandwidth, so called "super-fast", broadband internet.

To maximise the benefits of fiber optic networks, optical fibers are preferably used for as much of the network as possible. In particular, many network operators are increasingly deploying fiber to the home (FTTH) networks. There is a constant and rapid development of FTTH markets worldwide, in particular in the years since the COVID-19 pandemic increasing the prevalence of home working around the world. There is a broad market need for FTTH networks, of which fiber optic enclosures (e.g., wall terminals) installed in flats and houses are a crucial part. Fiber optic enclosures are widely used in the fiber to the 'X' (FTTX) part of the network and are installed at various points in the network up to and including directly in the end customer location. In greenfield sites, wall outlets are often integrated with other structural elements directly in the walls. However for brownfield sites, fiber optic outlets often need to be applied externally. As well as at the end customer location, fiber optic enclosures may be needed upstream at various points of the fiber optic network and they may be installed in a variety of different types of location.

Fiber optic enclosures often house a number of fiber optic components, such as connections and splices which must be kept safe and secure within the fiber optic enclosure in a variety of different locations. In order to do this effectively, fiber optic enclosures are preferably capable of being mounted using a variety of different means, such as using one or more screws or similar fixings to attach the fiber optic enclosure to a wall or by using a belt attachment to attach the fiber optic enclosure to a post. However, including a number of different types of attachment points can require different parts to be provided for a fiber optic enclosure for different scenarios and if the wrong part is provided this can prevent correct installation. Furthermore, providing multiple types of attachment on the same components can be cumbersome and confusing for an engineer installing the fiber optic enclosure. Furthermore, having multiple types of attachment can mean larger packaging requirements for transportation and delivery of the fiber optic enclosure and could cause trouble in cluttered installation environments.

Embodiments of the present invention may address one or more of these problems, amongst others.

### SUMMARY

The invention is defined in the independent claims, to which the reader is now directed. Preferred or advantageous features are set out in the dependent claims.

According to a first aspect of the invention, a mount for a fiber optic enclosure is provided. The mount comprises a back plate and a mounting tab attached to the back plate and movable between a first position and a second position. The mounting tab comprises a first attachment point. In the first position the first attachment point is exposed for mounting to a surface, and in the second position the back plate and mounting tab cooperate to define a second attachment point.

In this manner, a mount for a fiber optic enclosure is provided that has a deployable mounting tab, which can be moved between a first and a second position, enabling the mount to provide two different attachment points for mounting in different contexts.

Optionally, in the second position the first attachment point is not exposed for mounting to a surface.

Having the first attachment point not exposed when the mounting tab is in the second position means that the mounting tab can be conveniently stowed for storage and when using the second attachment means it is more simple for an engineer installing the mount.

Optionally, the second attachment point is a belt attachment point.

Providing a belt attachment point enables the mount to be conveniently mounted to a variety of posts, poles, and similar objects.

Optionally, the back plate comprises a recess and the mounting tab comprises a channel that cooperate to define the belt attachment point in the second position.

Having a recess in the back plate and a channel in the mounting tab provide a convenient means for forming the second attachment point by creating a channel to retain a belt.

Optionally, the mounting tab is configured to move linearly between the first position and the second position.

This makes it convenient to utilise both of the attachment points depending upon the situation, by sliding the mounting tab between the first and second positions.

Optionally, the back plate comprises opposing flanges to retain the mounting tab and restrict movement of the mounting tab to linear movement between the first position and the second position.

Utilising a pair of opposing flanges ensures that the mounting tab is retained by the back plate while also allowing movement of the mounting tab between the first position and the second position.

Optionally, the mounting tab comprises rails configured to interact with the opposing flanges of the back plate.

Providing rails on the mounting tab enables the mounting tab to be retained by the back plate while also allowing movement of the mounting tab between the first position and the second position.

Optionally, the mount comprises an engagement point, first position locking features, and second position locking features. The engagement point is configured to engage with the first locking features to retain the mounting tab in the first position and the engagement point is configured to engage with the second locking features to retain the mounting tab in the second position.

Utilising an engagement point that can interact with first and second locking features enables the mounting tab to be retained in each of the first position and the second position once moved to that position.

Optionally, the engagement point is disposed on the back plate and the first locking features and the second locking features are disposed on the mounting tab.

Optionally, the engagement point is disposed on the mounting tab and the first locking features and the second locking features are disposed on the back plate.

Optionally, wherein the engagement point comprises one or more protrusions and the first locking features and the second locking features comprise corresponding one or more notches for engaging with the one or more protrusions of the engagement point.

Optionally, the engagement point comprises one or more notches and the first locking features and the second locking features comprise corresponding one or more protrusions for engaging with the one or more notches of the engagement point.

Utilising corresponding protrusions and notches provides a convenient and simple way to retain the mounting tab in the first position and the second position once moved into those positions by providing a latching function, as well as enabling the mounting tab to be moved to the other position by applying a force to move the protrusions out of the notches.

Optionally, the mounting tab comprises a latch to prevent the mounting tab from moving beyond the first position.

This prevents the mounting tab from being separated from the back plate and supports the weight of the mount and any attached fiber optic enclosure when the first attachment point is used for mounting.

Optionally, the back plate comprises a ridge configured to engage with an edge of the mounting tab to prevent the mounting tab from moving beyond the second position.

This prevents the mounting tab from moving beyond the desired position and separating from the back plate enabling convenient and simple operation.

Optionally, the first attachment point is a hole for receiving a hook, screw, nail or other protrusion.

This allows for a variety of common attachment means to be used to attach the mount to a surface.

Optionally, the first attachment point is a keyhole shape.

A keyhole shape advantageously enables a screw or nail with a suitable head to be used to attach the mount to a surface in a secure manner.

Optionally, the first attachment point is a hook, latch, or other protrusion.

Optionally, the mount further comprises a third attachment point disposed on an opposite side of the back plate to the first attachment point when the mounting tab is in the first position.

Utilising a third attachment point can provide for a more secure attachment, particularly to a surface when the first attachment point is also used.

Optionally, the third attachment point is a hole for receiving a hook, screw, nail or other protrusion.

This allows for a variety of common attachment means to be used to attach the mount to a surface.

Optionally, the third attachment point is a keyhole shape.

A keyhole shape advantageously enables a screw or nail with a suitable head to be used to attach the mount to a surface in a secure manner.

Optionally, the third attachment point is a hook, latch, or other protrusion.

According to a second aspect of the invention, a fiber optic enclosure is provided. The fiber optic enclosure comprises a mount, the mount comprising a back plate and a mounting tab attached to the back plate and movable between a first position and a second position. The mounting tab comprising a first attachment point. In the first position the first attachment point is exposed for mounting to a surface, and in the second position the back plate and mounting tab cooperate to define a second attachment point.

Additional features and advantages will be set forth in the detailed description which follows, and in part will be readily apparent to those skilled in the art from that description or recognized by practicing the invention as described herein, including the detailed description that follows, the claims, as well as the appended drawings.

It is to be understood that both the foregoing general description and the following detailed description present embodiments, and are intended to provide an overview or framework for understanding the nature and character of the disclosure. The accompanying drawings are included to provide a further understanding, and are incorporated into and constitute a part of this specification. The drawings illustrate various embodiments, and together with the description serve to explain the principles and operation of the concepts disclosed.

### BRIEF DESCRIPTION OF THE DRAWINGS

The embodiments of the disclosure will be described with respect to the Figures, in which:
Figure 1 illustrates a fiber optic enclosure according to aspects of the disclosure;
Figure 2 illustrates a fiber optic enclosure according to aspects of the disclosure;
Figures 3A and 3B illustrate a mounting tab according to aspects of the disclosure; and
Figure 4 illustrates a portion of a back plate according to aspects of the disclosure.

Like components across different figures are represented by like reference numerals.

### DETAILED DESCRIPTION OF THE INVENTION

Reference will now be made in detail to certain embodiments, examples of which are illustrated in the accompanying drawings, in which some, but not all features are shown. Indeed, embodiments disclosed herein may be embodied in many different forms and should not be construed as limited to the embodiments set forth herein; rather, these embodiments are provided so that this disclosure will satisfy applicable legal requirements. Whenever possible, like reference numbers will be used to refer to like components or parts.

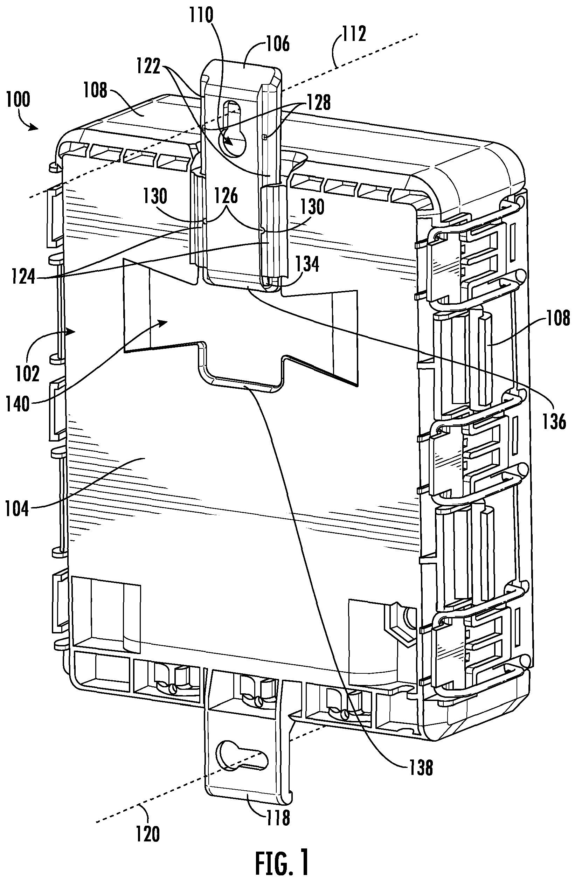

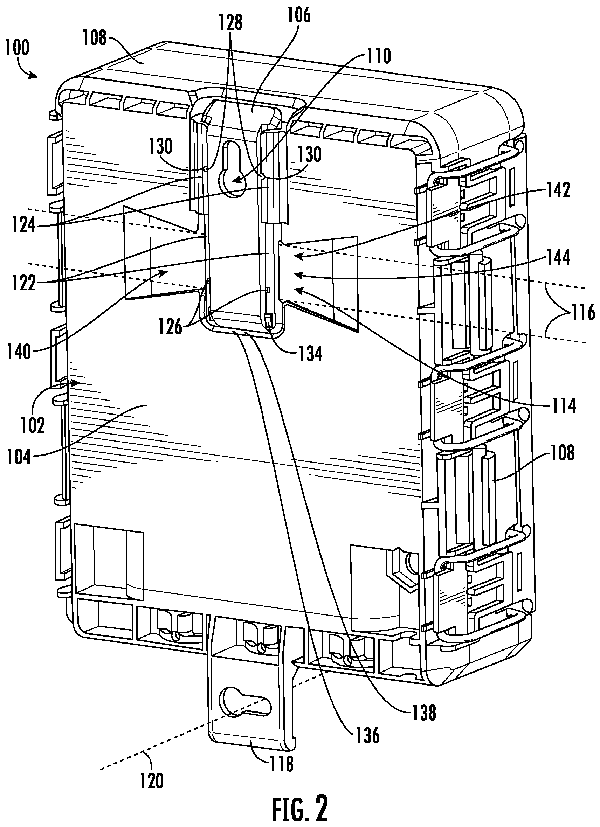

Figures 1 and 2 illustrate a fiber optic enclosure 100. Fiber optic enclosure comprises a mount 102 comprising a back plate 104 and a mounting tab 106, as well as a number of side walls 108 and a front plate (not shown). Back plate 104, side walls 108, and the front plate define an internal volume which can house one or more fiber optic components including, but not limited to, splices, splitters, patches, adapters and the like. Typically, the internal volume of the fiber optic enclosure 100 can be accessed, for example by removing or opening the front plate of the fiber optic enclosure 100 which may be attached to a side wall 108 using hinges. In some other examples, the front plate may be entirely removed in order to access the internal volume of the fiber optic enclosure 100. Yet other examples may provide access to the internal volume via one or more side walls 108. The present application is not limited in relation to these aspects of the fiber optic enclosure 100, and other embodiments will be apparent to the person skilled in the art.

Mount 102 enables the fiber optic enclosure 100 to be mounted in various ways depending upon the position of the mounting tab 106 relative to the back plate 104. Figure 1 illustrates the mounting tab 106 in a first position, whereby a portion of the mounting tab 106 extends beyond the back plate 104. In this first position, a first attachment point 110 is exposed for mounting the fiber optic enclosure 100 to a surface. In the illustrated embodiment, the first attachment point 110 is a keyhole shaped hole, through which a screw, nail, hook or the like can be inserted along axis 112 for mounting the fiber optic enclosure to a surface. It will be appreciated that other types of holes or attachment points may be used in the first attachment point 110.

Figure 2 illustrates the mounting tab 106 in a second position, whereby the back plate 104 and the mounting tab 106 cooperate to define a second attachment point 114. The second attachment point 114 comprises a passage 144 defined between the back plate 104 and the mounting tab 106 through which a belt or strap can be position, as illustrated by dashed lines 116, for mounting the fiber optic enclosure 100 to a post, pole, or similar object.

Comparing Figures 1 and 2, it can be seen that when the mounting tab 106 is in the first position (Figure 1) the second attachment point 114 is not defined. That is, when the mounting tab 106 is in the first position, the second attachment point 114 cannot be used to mount the fiber optic enclosure 100 to an object. Conversely, it can be seen that when the mounting tab 106 is in the second position (Figure 2) the first attachment point 110 is not exposed. That is, when the mounting tab 106 is in the second position, the first attachment point 110 is obscured by the back plate 104 and cannot be used to mount the fiber optic enclosure 100 to a surface.

In addition to the first and second attachment points 110, 114, the fiber optic enclosure 100 illustrated in Figures 1 and 2 also comprises a third attachment point 118. Third attachment point 118 is disposed on an opposite side of the fiber optic enclosure 100 to the first attachment point 110, extending beyond a side wall 108 of the fiber optic enclosure 100. Like first attachment point 110, third attachment point 118 also comprises a keyhole shaped hole for receiving a screw, nail, hook or the like along axis 120 to attach the fiber optic enclosure 100 to a surface. It will be appreciated that other shaped holes or types of attachment point may be used in the third attachment point 118. In the illustrated embodiment, the third attachment point 118 is in a fixed position, but in some embodiments the third attachment point 118 can be deployable similarly to the first attachment point 110 as described above.

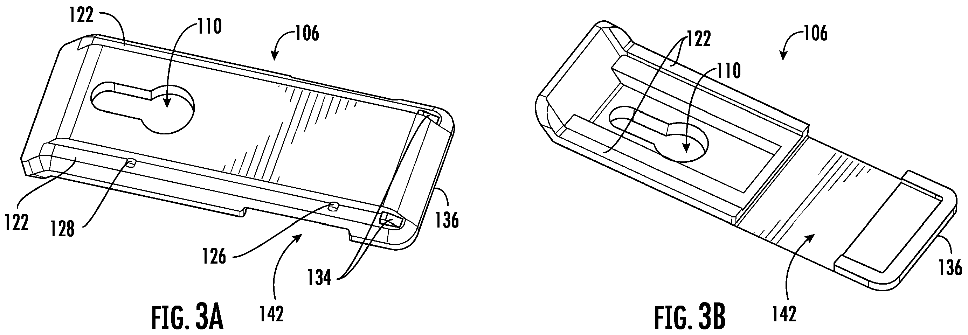

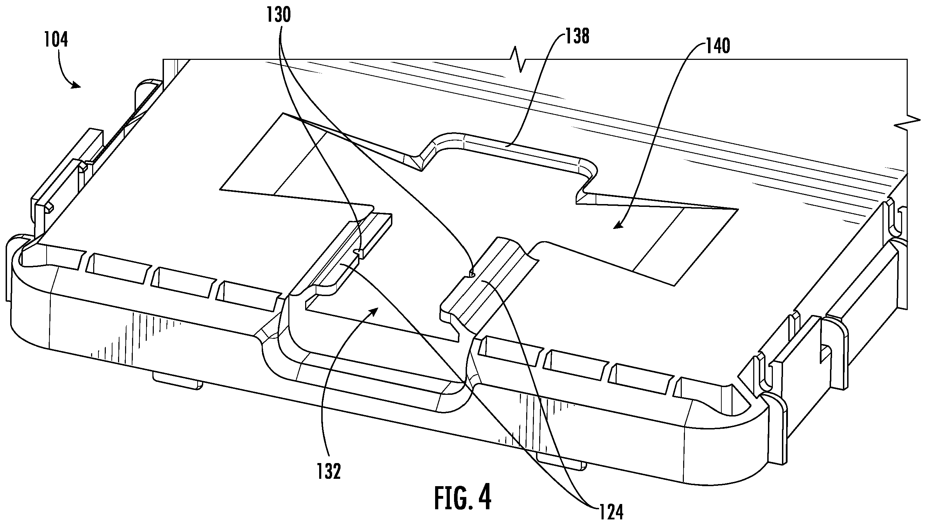

To move between the first position and the second position, the mounting tab 106 is provided with a pair of rails 122, which can be seen most clearly in Figures 3A and 3B, which illustrate two views of the mounting tab 106 of Figures 1 and 2. The rails 122 of the mounting tab 106 cooperate with corresponding flanges 124 of the back plate 104 to enable the mounting tab 106 to move linearly between the first position and the second position whilst still retaining the mounting tab 106 against the back plate 104. The flanges 124 can be seen most clearly in Figure 4, which illustrates a view of a portion of the back plate 104 of Figures 1 and 2. As can be seen in Figure 4, flanges 124 create a channel 132 for the mounting tab 106 to linearly move along between the first position and the second position.

To retain the mounting tab 106 in the first position and the second position, the mounting tab is provided with locking features, visible most clearly in Figure 3A. The locking features comprise first locking features 126 for retaining the mounting tab 106 in the first position and second locking features 128 for retaining the mounting tab in the second position. The locking features 126, 128 are configures to interact with an engagement point 130 on the back plate 104, seen most clearly in Figure 4.

As illustrated in the Figures, the first locking features 126 and the second locking features 128 each comprise a pair of protrusions disposed on the rails 122 of the mounting tab 106, one protrusion on either side of the mounting tab 106. To engage with these protrusions, the engagement point 130 on the back plate 104 comprises a pair of notches to receive and retain the protrusions of the first locking features 126 when the mounting tab 106 is in the first position and the protrusions of the second locking features 128 when the mounting tab 106 is in the second position.

While in the illustrated embodiments the locking features 126, 128 are disposed on the mounting tab 106 and the engagement point 130 is disposed on the back plate 104, in other examples the engagement point 130 may equally disposed on the mounting tab 106 with the locking features 126, 128 disposed on the back plate 104. Similarly, while in the illustrated embodiments the locking features 126, 128 comprise protrusions and the engagement point 130 comprises a notch, in other examples the engagement point 130 may equally comprise protrusions and the locking features 126, 128 may comprise notches.

To prevent the mounting tab 106 from moving too far out from the back plate 104 (i.e., to prevent the mounting tab 106 from moving beyond the first position), the mounting tab comprises a pair of latches 134, visible in Figure 3A. These engage with an edge of the flanges 124 of the back plate 104 when the mounting tab 106 is in the first position to prevent further movement of the mounting tab 106 in a direction away from the second position, as illustrated in Figure 1.

Conversely, to prevent the mounting tab 106 from moving too far inwards (i.e., to prevent the mounting tab 106 from moving beyond the second position), the mounting tab 106 comprises an edge 136 (visible in Figures 3A and 3B) that abuts a ridge 138 (visible in Figure 4) of the back plate 104 when the mounting tab 106 is in the second position to prevent further movement of the mounting tab 106 in a direction away from the first position, as illustrated in Figure 2. As can be seen in Figure 4, in the illustrated embodiment the ridge 138 defines the rear end of the channel 132 of the back plate 104 through which the mounting tab 106 is configured to move, though this need not be the case and in other examples the ridge 138 may be a separate feature to the channel 132.

In the illustrated embodiment of Figures 1 to 4, in order to form the second attachment point 114, the back plate 104 comprises a recess 140 and the mounting tab 106 comprises a corresponding channel 142. The recess 140 of the back plate 104 can be clearly seen in Figure 4, while the channel 142 of the mounting tab 106 can be clearly seen in Figures 3A and 3B. The recess 140 of the back plate 104 and the channel 142 of the mounting tab 106 are configured such that, when the mounting tab 106 is in the second position, the recess 140 of the back plate 104 and the channel 142 of the mounting tab 106 align to form passage 144 as illustrated in Figure 2 and discussed previously. While in the illustrated embodiment both a recess 140 in the back plate 104 and a channel 142 in the mounting tab 106 are provided to cooperate to define the second attachment point 114, in other embodiments just the recess 140 in the back plate 104 or just the channel 142 in the mounting tab 106 may be provided alone and may be sufficient to define the second attachment point 114 when the mounting tab 106 is in the second position.

As illustrated in Figures 1 and 2, the back plate 104 may make up the entire rear portion of the fiber optic enclosure 100. However, it will be appreciated that in other embodiments the back plate 104 of the mount 102 may be just one part of the rear portion of a fiber optic enclosure 100 and other panels may also be provided.

The back plate 104, mounting tab 106, and other parts of the fiber optic enclosure 100, such as side walls 108, may be made of any suitable material which may depend upon the environments in which the fiber optic enclosure 100 is intended to be used. Typical materials include various rigid plastics and polymer materials, but metals, woods, ceramics or other materials may also be used. It will also be appreciated that different parts of the fiber optic enclosure 100 may be made from different materials.

As used herein, the terms "fiber-optic cables" and/or "optical fibers" include all types of single mode and multi-mode light waveguides, including one or more optical fibers that may be upcoated, colored, buffered, ribbonized and/or have other organizing or protective structure in a cable such as one or more tubes, strength members, jackets or the like. Likewise, other types of suitable optical fibers include bend-insensitive optical fibers, or any other expedient of a medium for transmitting light signals. An example of a bend-insensitive optical fiber is ClearCurve^{®} Multimode fiber commercially available from Corning Incorporated.

It is to be understood that the disclosure is not to be limited to the specific embodiments disclosed and that modifications and other embodiments are intended to be included within the scope of the appended claims. Although specific terms are employed herein, they are used in a generic and descriptive sense only and not for purposes of limitation.

Particular aspects of the invention are set out in the following numbered clauses:
Clause 1. A mount for a fiber optic enclosure comprising:
   a back plate; and
   a mounting tab attached to the back plate and movable between a first position and a second position, the mounting tab comprising a first attachment point;
   wherein in the first position the first attachment point is exposed for mounting to a surface; and
   wherein in the second position the back plate and mounting tab cooperate to define a second attachment point.
Clause 2. The mount of clause 1, wherein in the second position the first attachment point is not exposed for mounting to a surface.
Clause 3. The mount of clause 1 or 2, wherein the second attachment point is a belt attachment point.
Clause 4. The mount of any preceding clause, wherein the back plate comprises a recess and the mounting tab comprises a channel that cooperate to define the belt attachment point in the second position.
Clause 5. The mount of any preceding clause, wherein the mounting tab is configured to move linearly between the first position and the second position.
Clause 6. The mount of clause 5, wherein the back plate comprises opposing flanges to retain the mounting tab and restrict movement of the mounting tab to linear movement between the first position and the second position.
Clause 7. The mount of clause 6, wherein the mounting tab comprises rails configured to interact with the opposing flanges of the back plate.
Clause 8. The mount of any preceding clause, wherein the mount comprises an engagement point, first position locking features, and second position locking features;
   wherein the engagement point is configured to engage with the first locking features to retain the mounting tab in the first position and wherein the engagement point is configured to engage with the second locking features to retain the mounting tab in the second position.
Clause 9. The mount of clause 8, wherein the engagement point is disposed on the back plate and the first locking features and the second locking features are disposed on the mounting tab.
Clause 10. The mount of clause 8, wherein the engagement point is disposed on the mounting tab and the first locking features and the second locking features are disposed on the back plate.
Clause 11. The mount of any of clauses 8 to 10, wherein the engagement point comprises one or more protrusions and the first locking features and the second locking features comprise corresponding one or more notches for engaging with the one or more protrusions of the engagement point.
Clause 12. The mount of any of clauses 8 to 10, wherein the engagement point comprises one or more notches and the first locking features and the second locking features comprise corresponding one or more protrusions for engaging with the one or more notches of the engagement point.
Clause 13. The mount of any preceding clause, wherein the mounting tab comprises a latch to prevent the mounting tab from moving beyond the first position.
Clause 14. The mount of any preceding clause, wherein the back plate comprises a ridge configured to engage with an edge of the mounting tab to prevent the mounting tab from moving beyond the second position.
Clause 15. The mount of any preceding clause, wherein the first attachment point is a hole for receiving a hook, screw, nail or other protrusion.
Clause 16. The mount of clause 15, wherein the first attachment point is a keyhole shape.
Clause 17. The mount of any preceding clause, wherein the first attachment point is a hook, latch, or other protrusion.
Clause 18. The mount of any preceding clause, further comprising a third attachment point disposed on an opposite side of the back plate to the first attachment point when the mounting tab is in the first position.
Clause 19. The mount of clause 18, wherein the third attachment point is a hole for receiving a hook, screw, nail or other protrusion.
Clause 20. The mount of clause 19, wherein the third attachment point is a keyhole shape.
Clause 21. The mount of clause 18, wherein the third attachment point is a hook, latch, or other protrusion.
Clause 22. A fiber optic enclosure comprising a mount, the mount comprising:
   a back plate; and
   a mounting tab attached to the back plate and movable between a first position and a second position, the mounting tab comprising a first attachment point;
   wherein in the first position the first attachment point is exposed for mounting to a surface; and
   wherein in the second position the back plate and mounting tab cooperate to define a second attachment point.
Clause 23. A fiber optic enclosure comprising the mount of any of clauses 1 to 21.

## Claims

1. A mount for a fiber optic enclosure comprising:
a back plate; and
a mounting tab attached to the back plate and movable between a first position and a second position, the mounting tab comprising a first attachment point;
wherein in the first position the first attachment point is exposed for mounting to a surface; and
wherein in the second position the back plate and mounting tab cooperate to define a second attachment point.

2. The mount of claim 1, wherein in the second position the first attachment point is not exposed for mounting to a surface.

3. The mount of claim 1 or claim 2, wherein the second attachment point is a belt attachment point.

4. The mount of claim 3, wherein the back plate comprises a recess and the mounting tab comprises a channel that cooperate to define the belt attachment point in the second position.

5. The mount of any of claims 1 to 4, wherein the mounting tab is configured to move linearly between the first position and the second position.

6. The mount of claim 5, wherein the back plate comprises opposing flanges to retain the mounting tab and restrict movement of the mounting tab to linear movement between the first position and the second position.

7. The mount of claim 6, wherein the mounting tab comprises rails configured to interact with the opposing flanges of the back plate.

8. The mount of any of claims 1 to 7, wherein the mount comprises an engagement point, first position locking features, and second position locking features;
wherein the engagement point is configured to engage with the first locking features to retain the mounting tab in the first position and wherein the engagement point is configured to engage with the second locking features to retain the mounting tab in the second position.

9. The mount of claim 8, wherein the engagement point is disposed on the back plate and the first locking features and the second locking features are disposed on the mounting tab.

10. The mount of claim 8, wherein the engagement point is disposed on the mounting tab and the first locking features and the second locking features are disposed on the back plate.

11. The mount of any of claims 8 to 10, wherein the engagement point comprises one or more protrusions and the first locking features and the second locking features comprise corresponding one or more notches for engaging with the one or more protrusions of the engagement point.

12. The mount of any of claims 8 to 10, wherein the engagement point comprises one or more notches and the first locking features and the second locking features comprise corresponding one or more protrusions for engaging with the one or more notches of the engagement point.

13. The mount of any preceding claim, wherein the mounting tab comprises a latch to prevent the mounting tab from moving beyond the first position.

14. The mount of any preceding claim, wherein the back plate comprises a ridge configured to engage with an edge of the mounting tab to prevent the mounting tab from moving beyond the second position.

15. The mount of any preceding claim, wherein the first attachment point is a hole for receiving a hook, screw, nail or other protrusion.
